(19) Europäisches Patentamt
European Patent Office
Office européen des brevets

(11) **EP 3 783 146 B1**

(12) **EUROPEAN PATENT SPECIFICATION**

(45) Date of publication and mention
of the grant of the patent:
**26.10.2022 Bulletin 2022/43**

(21) Application number: **19203718.2**

(22) Date of filing: **17.10.2019**

(51) International Patent Classification (IPC):
*D06M 11/155* (2006.01)    *D06M 13/342* (2006.01)
*D06M 15/03* (2006.01)    *D06M 13/419* (2006.01)

(52) Cooperative Patent Classification (CPC):
**D06M 11/155; D06M 13/419; D06M 15/03;**
**D06M 15/53;** A41B 17/00; A41D 31/125;
D02G 3/04; D06B 3/105; D06C 9/02; D06M 13/342;
D06M 13/513; D06M 2101/06; D06M 2101/38;
D10B 2201/10; D10B 2331/04

(54) **METHOD OF PREPARING A PERSPIRATION WICKING AND EXHAUST FABRIC**

VERFAHREN ZUM ANFERTIGEN EINES STOFFES MIT DOCHTWIRKUNG UND
ABDAMFFUNKTION VON SCHWEISS

PROCÉDÉ DE FABRICATION D'UN TRICOT À FONCTION D'ÉVACUATION ET D'ÉVAPORATION
DE LA TRANSPIRATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **21.08.2019 CN 201910771991**

(43) Date of publication of application:
**24.02.2021 Bulletin 2021/08**

(73) Proprietor: **Shanghai Xiaolanxiang Garment Co.,**
**Ltd.**
**Pundong New Area, Shanghai (CN)**

(72) Inventor: **JIA, Youbing**
**Pilot Free Trade Zone**
**Shanghai (CN)**

(74) Representative: **Yalçiner Patent and Consulting**
**Ltd.**
**Tunus Caddesi 85/3-4**
**Kavaklidere**
**Ankara (TR)**

(56) References cited:
**CN-A- 103 882 603    CN-A- 107 904 744**
**CN-A- 109 505 045**

**Description**

**TECHNICAL FIELD**

The present invention relates to a technical field of textile products, and particularly to a fabric for perspiration exhaust pajamas and underclothing and a preparing method thereof.

**BACKGROUND**

Recently, with the improvement in people's living standard and the rapid development of the garment industry, consumers require the garments not only can keep warm and cover the body, but also have a pleasant looking, good wearing comfort and good inner quality. The wearing comfort has gradually become a major consideration for consumers when they choose the garment.

Cotton-based garments are particularly popular in the garment market. However, since the cotton fiber has a good hygroscopicity, in the case of excessive sweating, the cloth absorbs a large amount of sweat to become wet and heavy and sticks to the skin, resulting in reduction in a moisture permeability speed and a desorbing speed. Moreover, since the cotton fiber swells after absorbing moisture and the pores between the cotton fibers are blocked, the transmission of sweat and sweat gas between the fibers becomes more difficult, and the microclimate between the skin and the garment and the exchange of heat and moisture between the garment and the external environment are affected, thereby producing a stuffy feeling. Therefore, the cotton fiber is not appropriate to prepare a moisture adsorption and perspiration exhaust fabric.

Coolmax fiber is a functional fiber developed by Du Pont company of United States in 1986. The Coolmax fiber has a flat cross-shaped cross section, so its surface forms four grooves, i.e., four perspiration exhaust tubes. The flat four-groove structure allows adjacent fibers to be easily brought together to form a plurality of fine wicking tubes with a strong capillary effect, and thus has a function of quickly discharging the sweat to the surface of the cloth. At the same time, a specific surface area of the fiber is 19.8% larger than that of the general circular cross-section fiber with the same fineness, and thus, the sweat can be quickly evaporated into the surrounding atmosphere after being discharged to the surface of the fiber cloth. Such a fiber has an excellent gas permeability since the irregular cross section thereof provides a large gap between the fibers, and as a result, the fiber cloth has an excellent moisture permeability due to the structure of the Coolmax fiber.

At present, a method of improving the moisture adsorption and perspiration exhaust property of the fiber cloth with a finishing technique has a relatively low cost and relatively simple process, which mainly uses some special chemical additives to perform the functional finishing of the cloth so that the cloth has the moisture adsorption and perspiration exhaust property, but there is a problem of poor durability. At present, the research on the perspiration exhaust finishing of cloth is mainly focused on a finishing agent which mainly comprises a hydrophilic additive for the purpose of improving the moisture adsorption and perspiration exhaust property of the fabric and improving the wearing comfort of the cloth.

In light of the above technical problems, the present invention is to develop a fabric for perspiration exhaust pajamas and underclothing to meet people's requirements on a multi-function fabric.

Relevant prior art includes CN 103 882 603 A and CN 109 505 045 A.

**SUMMARY**

In light of the disadvantages in the conventional art, the technical problem to be solved by the present invention is to provide a preparing method of a fabric suitable for pajamas or underclothing having a persipiration wicking functionality through the thickness of the fabric and a perspiration exhaust functionality at a surface thereof.

The fabric for perspiration exhaust pajamas or underclothing, which is obtained by the method of the present invention has remarkable hygroscopicity and moisture permeability, and good durability, wash resistance and moisture adsorption and perspiration exhaust property, thereby keeping the skin dry, reducing sticking of a cloth to a human body, improving the sensitivity to cold, and significantly improving a wearing comfort.

The object of the present invention is achieved by the features of claim 1.

Preferably, the cross-linking agent is one or more of allyl glycidyl ether, 3-glycidoxypropyltrimethoxysilane and trimethylolpropane triglycidyl ether.

More preferably, the cross-linking agent is allyl glycidyl ether.

The perspiration exhaust fiber may be one or more of Coolmax® fiber, Coolpass® fiber and Porel® fiber, the regenerated cellulose fiber is one or more of Modal® fiber, Tencel® fiber, bamboo fiber and cuprammonium rayon, and the spandex is one or two of Lycra® and Mobilon®.

## DETAILED DESCRIPTION OF THE EMBODIMENTS

In the present invention, unless otherwise specified, all equipment and raw materials are commercially available or commonly used in the industry, and unless otherwise specified, the methods in the following examples are conventional methods in this field.

Coolmax fiber, produced by INVISTA company, 1.3D.

Bamboo fiber, using Rio Bamboo® fiber i.e., the Lyocell bamboo fiber produced by Shanghai Leo Fiber Enterprise Development Co., Ltd.

Spandex, using DuPont Lycra spandex filament, 20D.

Moisture adsorption and perspiration exhaust agent, using the moisture adsorption and perspiration exhaust agent produced by 3M Scotchgard Company of United States, model number: FC-226.

Glycine, purchased from Shanghai Baoman Biotechnology Co., Ltd.

Magnesium chloride, anhydrous magnesium chloride purchased from Shanghai Macklin Biochemical technology Co., Ltd.

Calcium chloride, anhydrous calcium chloride purchased from Shanghai Macklin Biochemical technology Co., Ltd.

Xanthan gum, purchased from Shanghai Macklin Biochemical technology Co., Ltd.

Coconut oil diethanolamine amide, purchased from Shanghai Macklin Biochemical technology Co., Ltd., model number: 6501.

Acrylic acid, purchased from Shanghai Macklin Biochemical technology Co., Ltd.

Acrylamide, purchased from Shanghai Aladdin Biochemical technology Co., Ltd.

Allyl glycidyl ether, purchased from Shanghai Macklin Biochemical technology Co., Ltd.

3-glycidoxypropyltrimethoxysilane, purchased from Hangzhou Dadi Chemical Co., Ltd.

Trimethylolpropane triglycidyl ether, purchased from Shanghai Yuanye Biotechnology Co., Ltd.

### First Example

A preparing method of a fabric for perspiration exhaust pajamas or underclothing comprises:

(1) grey cloth knitting: blending Coolmax fiber 35 parts by weight and bamboo fiber 50 parts by weight to obtain a blended yarn, and then knitting the blended yarn and spandex 15 parts by weight with a circular knitting machine to obtain the fabric which is a double-sided cloth with a weight of 200g/m$^2$;

(2) singeing: singeing the grey cloth to obtain singed grey cloth through two-face-two-back singeing under the condition that a cloth speed is 90m/min, a distance between the grey cloth and a reducing flame is 1.2cm, a distance between the grey cloth and a copper plate is 0.6cm, a distance between the grey cloth and a cylinder is 6cm, and a singeing grade is 5 grades; and

(3) moisture adsorption and perspiration exhaust finishing: immersing the singed grey cloth in a finishing liquid for 30 minutes at a temperature of 25°C and at a mass ratio of 1:15 which is a mass ratio of the singed grey cloth to the finishing liquid, drying the singed grey cloth taken out at 100°C for 6 minutes, baking at 150°C for 120 seconds, washing twice at room temperature, and then drying at 70°C to constant weight to obtain the fabric for perspiration exhaust pajamas and underclothing.

The finishing liquid is prepared by the following method: adding penetrating agent 0.4 parts by weight, moisture adsorption and perspiration exhaust finishing agent 3 parts by weight, xanthan gum 0.6 parts by weight and water 96 parts by weight to the water, and stirring at 200rpm/min and 25°C for 10 minutes.

The penetrating agent is coconut oil diethanolamine amide.

### Second Example

A preparing method of a fabric for perspiration exhaust pajamas or underclothing comprises:

(1) grey cloth knitting: blending Coolmax fiber 35 parts by weight and bamboo fiber 50 parts by weight to obtain a blended yarn, and then knitting the blended yarn and spandex 15 parts by weight with a circular knitting machine to obtain the fabric which is a double-sided cloth with a weight of 200g/m$^2$;

(2) singeing: singeing the grey cloth to obtain singed grey cloth through two-face-two-back singeing under the condition that a cloth speed is 90m/min, a distance between the grey cloth and a reducing flame is 1.2cm, a distance between the grey cloth and a copper plate is 0.6cm, a distance between the grey cloth and a cylinder is 6cm, and a singeing grade is 5 grades; and

(3) moisture adsorption and perspiration exhaust finishing: immersing the singed grey cloth in a finishing liquid for 30 minutes at a temperature of 25°C and at a mass ratio of 1:15 which is a mass ratio of the singed grey cloth to the finishing liquid, drying the singed grey cloth taken out at 100°C for 6 minutes, baking at 150°C for 120 seconds, washing twice at room temperature, and then drying at 70°C to constant weight to obtain the fabric for perspiration exhaust pajamas and underclothing.

The finishing liquid is prepared by the following method: adding penetrating agent 0.4 parts by weight, moisture adsorption and perspiration exhaust finishing agent 3 parts by weight, modified xanthan gum 0.6 parts by weight, and water 96 parts by weight to the water, and stirring at 200rpm/min and 25°C for 10 minutes.

The penetrating agent is coconut oil diethanolamine amide.

The modified xanthan gum is prepared by the following method: obtaining neutralized acrylic acid by mixing acrylic acid 12g and 5mol/L sodium hydroxide solution 1.1g and stirring at 150 rpm/min for 4 minutes, adding xanthan gum 1g to water 140mL, stirring at 150rpm/min and 25°C for 50 minutes, adding the neutralized acrylic acid, acrylamide 12g and cross-linking agent 0.3g, stirring at 150rpm/min while warming to a temperature of 70°C in a nitrogen atmosphere, adding dropwise 8wt% potassium persulfate solution 6g within 30 minutes, stirring at 150rpm/min and 70°C for 3 hours, then adding ethanol 700 mL, stirring at 60rpm/min for 4 minutes, standing at 25°C for 2 hours and filtrating with a 500 mesh filter cloth, washing an obtained filter cake with 80 volume% ethanol twice, drying at 50°C to constant weight, and pulverizing and passing through a 60 mesh sieve to obtain the modified xanthan gum.

The cross-linking agent is allyl glycidyl ether.

## First Comparative Example

The first comparative example is substantially the same as the second example except that the modified xanthan gum is prepared by the following method: obtaining neutralized acrylic acid by mixing acrylic acid 12g and 5mol/L sodium hydroxide solution 1.1g and stirring at 150 rpm/min for 4 minutes, adding xanthan gum 1g to water 140mL, stirring at 150rpm/min and 25°C for 50 minutes, adding the neutralized acrylic acid and acrylamide 12g, stirring at 150rpm/min while warming to a temperature of 70°C in a nitrogen atmosphere, adding dropwise 8wt% potassium persulfate solution 6g within 30 minutes, stirring at 150rpm/min and 70°C for 3 hours, then adding ethanol 700 mL, stirring at 60rpm/min for 4 minutes, standing at 25°C for 2 hours and filtrating with a 500 mesh filter cloth, washing an obtained filter cake with 80 volume% ethanol twice, drying at 50°C to constant weight, and pulverizing and passing through a 60 mesh sieve to obtain the modified xanthan gum.

## Third Example

A preparing method of a fabric for perspiration exhaust pajamas or underclothing comprises:

(1) grey cloth knitting: blending Coolmax fiber 35 parts by weight and bamboo fiber 50 parts by weight to obtain a blended yarn, and then knitting the blended yarn and spandex 15 parts by weight with a circular knitting machine to obtain the fabric which is a double-sided cloth with a weight of $200g/m^2$;

(2) singeing: singeing the grey cloth to obtain singed grey cloth through two-face-two-back singeing under the condition that a cloth speed is 90m/min, a distance between the grey cloth and a reducing flame is 1.2cm, a distance between the grey cloth and a copper plate is 0.6cm, a distance between the grey cloth and a cylinder is 6cm, and a singeing grade is 5 grades; and

(3) moisture adsorption and perspiration exhaust finishing: immersing the singed grey cloth in a finishing liquid for 30 minutes at a temperature of 25°C and at a mass ratio of 1:15 which is a mass ratio of the singed grey cloth to the finishing liquid, drying the singed grey cloth taken out at 100°C for 6 minutes, baking at 150°C for 120 seconds, washing twice at room temperature, and then drying at 70°C to constant weight to obtain the fabric for perspiration exhaust pajamas and underclothing.

The finishing liquid is prepared by the following method: adding penetrating agent 0.4 parts by weight, moisture adsorption and perspiration exhaust finishing agent 3 parts by weight, modified xanthan gum 0.6 parts by weight, and water 96 parts by weight to the water, and stirring at 200rpm/min and 25°C for 10 minutes.

The penetrating agent is coconut oil diethanolamine amide.

The modified xanthan gum is prepared by the following method: obtaining neutralized acrylic acid by mixing acrylic acid 12g and 5mol/L sodium hydroxide solution 1.1g and stirring at 150 rpm/min for 4 minutes, adding xanthan gum 1g to water 140mL, stirring at 150rpm/min and 25°C for 50 minutes, adding the neutralized acrylic acid, acrylamide 12g and cross-linking agent 0.3g, stirring at 150rpm/min while warming to a temperature of 70°C in a nitrogen atmosphere, adding dropwise 8wt% potassium persulfate solution 6g within 30 minutes, stirring at 150rpm/min and 70°C for 3 hours, then adding ethanol 700 mL, stirring at 60rpm/min for 4 minutes, standing at 25°C for 2 hours and filtrating with a 500 mesh filter cloth, washing an obtained filter cake with 80 volume% ethanol twice, drying at 50°C to constant weight, and pulverizing and passing through a 60 mesh sieve to obtain the modified xanthan gum.

The cross-linking agent is 3-glycidoxypropyltrimethoxysilane.

**Fourth Example**

A preparing method of a fabric for perspiration exhaust pajamas or underclothing comprises:

(1) grey cloth knitting: blending Coolmax fiber 35 parts by weight and bamboo fiber 50 parts by weight to obtain a blended yarn, and then knitting the blended yarn and spandex 15 parts by weight with a circular knitting machine to obtain the fabric which is a double-sided cloth with a weight of $200g/m^2$;
(2) singeing: singeing the grey cloth to obtain singed grey cloth through two-face-two-back singeing under the condition that a cloth speed is 90m/min, a distance between the grey cloth and a reducing flame is 1.2cm, a distance between the grey cloth and a copper plate is 0.6cm, a distance between the grey cloth and a cylinder is 6cm, and a singeing grade is 5 grades; and
(3) moisture adsorption and perspiration exhaust finishing: immersing the singed grey cloth in a finishing liquid for 30 minutes at a temperature of 25°C and at a mass ratio of 1:15 which is a mass ratio of the singed grey cloth to the finishing liquid, drying the singed grey cloth taken out at 100°C for 6 minutes, baking at 150°C for 120 seconds, washing twice at room temperature, and then drying at 70°C to constant weight to obtain the fabric for perspiration exhaust pajamas and underclothing.

The finishing liquid is prepared by the following method: adding penetrating agent 0.4 parts by weight, moisture adsorption and perspiration exhaust finishing agent 3 parts by weight, modified xanthan gum 0.6 parts by weight, and water 96 parts by weight to the water, and stirring at 200rpm/min and 25°C for 10 minutes.

The penetrating agent is coconut oil diethanolamine amide.

The modified xanthan gum is prepared by the following method: obtaining neutralized acrylic acid by mixing acrylic acid 12g and 5mol/L sodium hydroxide solution 1.1g and stirring at 150 rpm/min for 4 minutes, adding xanthan gum 1g to water 140mL, stirring at 150rpm/min and 25°C for 50 minutes, adding the neutralized acrylic acid, acrylamide 12g and cross-linking agent 0.3g, stirring at 150rpm/min while warming to a temperature of 70°C in a nitrogen atmosphere, adding dropwise 8wt% potassium persulfate solution 6g within 30 minutes, stirring at 150rpm/min and 70°C for 3 hours, then adding ethanol 700 mL, stirring at 60rpm/min for 4 minutes, standing at 25°C for 2 hours and filtrating with a 500 mesh filter cloth, washing an obtained filter cake with 80 volume% ethanol twice, drying at 50°C to constant weight, and pulverizing and passing through a 60 mesh sieve to obtain the modified xanthan gum.

The cross-linking agent is trimethylolpropane triglycidyl ether.

**Fifth Example**

A preparing method of a fabric for perspiration exhaust pajamas or underclothing comprises:

(1) grey cloth knitting: blending Coolmax fiber 35 parts by weight and bamboo fiber 50 parts by weight to obtain a blended yarn, and then knitting the blended yarn and spandex 15 parts by weight with a circular knitting machine to obtain the fabric which is a double-sided cloth with a weight of $200g/m^2$;
(2) singeing: singeing the grey cloth to obtain singed grey cloth through two-face-two-back singeing under the condition that a cloth speed is 90m/min, a distance between the grey cloth and a reducing flame is 1.2cm, a distance between the grey cloth and a copper plate is 0.6cm, a distance between the grey cloth and a cylinder is 6cm, and a singeing grade is 5 grades;
(3) pretreatment: immersing the singed grey cloth in a pretreatment liquid for 30 minutes at a temperature of 30°C and at a mass ratio of 1:15 which is a mass ratio of the singed grey cloth to the pretreatment liquid, drying the singed grey cloth taken out at 70°C to constant weight to obtain a pretreatment fabric; and
(4) moisture adsorption and perspiration exhaust finishing: immersing the pretreatment fabric in a finishing liquid for 30 minutes at a temperature of 25°C and at a mass ratio of 1:15 which is a mass ratio of the pretreatment fabric to the finishing liquid, drying the pretreatment fabric taken out at 100°C for 6 minutes, baking at 150°C for 120 seconds, washing twice at room temperature, and then drying at 70°C to constant weight to obtain the fabric for perspiration exhaust pajamas and underclothing.

The pretreatment liquid is prepared by the following method: mixing inorganic salt 2 parts by weight, glycine 0.3 parts by weight, acetic acid 1 part by weight and water 96.7 parts by weight, and stirring at 200rpm/min and 30°C for 10 minutes to obtain the pretreatment liquid.

The inorganic salt is magnesium chloride.

The finishing liquid is prepared by the following method: adding penetrating agent 0.4 parts by weight, moisture adsorption and perspiration exhaust finishing agent 3 parts by weight, modified xanthan gum 0.6 parts by weight, and water 96 parts by weight to the water, and stirring at 200rpm/min and 25°C for 10 minutes.

The penetrating agent is coconut oil diethanolamine amide.

The modified xanthan gum is prepared by the following method: obtaining neutralized acrylic acid by mixing acrylic acid 12g and 5mol/L sodium hydroxide solution 1.1g and stirring at 150 rpm/min for 4 minutes, adding xanthan gum 1g to water 140mL, stirring at 150rpm/min and 25°C for 50 minutes, adding the neutralized acrylic acid, acrylamide 12g and cross-linking agent 0.3g, stirring at 150rpm/min while warming to a temperature of 70°C in a nitrogen atmosphere, adding dropwise 8wt% potassium persulfate solution 6g within 30 minutes, stirring at 150rpm/min and 70°C for 3 hours, then adding ethanol 700 mL, stirring at 60rpm/min for 4 minutes, standing at 25°C for 2 hours and filtrating with a 500 mesh filter cloth, washing an obtained filter cake with 80 volume% ethanol twice, drying at 50°C to constant weight, and pulverizing and passing through a 60 mesh sieve to obtain the modified xanthan gum.

The cross-linking agent is allyl glycidyl ether.

## Second Comparative Example

The second comparative example is substantially the same as the fifth example except that the pretreatment liquid is prepared by the following method: mixing glycine 0.3 parts by weight, acetic acid 1 part by weight and water 98.7 parts by weight, and stirring at 200rpm/min and 30°C for 10 minutes to obtain the pretreatment liquid.

## Sixth Example

A preparing method of a fabric for perspiration exhaust pajamas or underclothing comprises:

(1) grey cloth knitting: blending Coolmax fiber 35 parts by weight and bamboo fiber 50 parts by weight to obtain a blended yarn, and then knitting the blended yarn and spandex 15 parts by weight with a circular knitting machine to obtain the fabric which is a double-sided cloth with a weight of 200g/m$^2$;

(2) singeing: singeing the grey cloth to obtain singed grey cloth through two-face-two-back singeing under the condition that a cloth speed is 90m/min, a distance between the grey cloth and a reducing flame is 1.2cm, a distance between the grey cloth and a copper plate is 0.6cm, a distance between the grey cloth and a cylinder is 6cm, and a singeing grade is 5 grades;

(3) pretreatment: immersing the singed grey cloth in a pretreatment liquid for 30 minutes at a temperature of 30°C and at a mass ratio of 1:15 which is a mass ratio of the singed grey cloth to the pretreatment liquid, drying the singed grey cloth taken out at 70°C to constant weight to obtain a pretreatment fabric; and

(4) moisture adsorption and perspiration exhaust finishing: immersing the pretreatment fabric in a finishing liquid for 30 minutes at a temperature of 25°C and at a mass ratio of 1:15 which is a mass ratio of the pretreatment fabric to the finishing liquid, drying the pretreatment fabric taken out at 100°C for 6 minutes, baking at 150°C for 120 seconds, washing twice at room temperature, and then drying at 70°C to constant weight to obtain the fabric for perspiration exhaust pajamas and underclothing.

The pretreatment liquid is prepared by the following method: mixing inorganic salt 2 parts by weight, glycine 0.3 parts by weight, acetic acid 1 part by weight and water 96.7 parts by weight, and stirring at 200rpm/min and 30°C for 10 minutes to obtain the pretreatment liquid.

The inorganic salt is calcium chloride.

The finishing liquid is prepared by the following method: adding penetrating agent 0.4 parts by weight, moisture adsorption and perspiration exhaust finishing agent 3 parts by weight, modified xanthan gum 0.6 parts by weight, and water 96 parts by weight to the water, and stirring at 200rpm/min and 25°C for 10 minutes.

The penetrating agent is coconut oil diethanolamine amide.

The modified xanthan gum is prepared by the following method: obtaining neutralized acrylic acid by mixing acrylic acid 12g and 5mol/L sodium hydroxide solution 1.1g and stirring at 150 rpm/min for 4 minutes, adding xanthan gum 1g to water 140mL, stirring at 150rpm/min and 25°C for 50 minutes, adding the neutralized acrylic acid, acrylamide 12g and cross-linking agent 0.3g, stirring at 150rpm/min while warming to a temperature of 70°C in a nitrogen atmosphere, adding dropwise 8wt% potassium persulfate solution 6g within 30 minutes, stirring at 150rpm/min and 70°C for 3 hours, then adding ethanol 700 mL, stirring at 60rpm/min for 4 minutes, standing at 25°C for 2 hours and filtrating with a 500 mesh filter cloth, washing an obtained filter cake with 80 volume% ethanol twice, drying at 50°C to constant weight, and pulverizing and passing through a 60 mesh sieve to obtain the modified xanthan gum.

The cross-linking agent is allyl glycidyl ether.

**Seventh Example**

A preparing method of a fabric for perspiration exhaust pajamas or underclothing comprises:

(1) grey cloth knitting: blending Coolmax fiber 35 parts by weight and bamboo fiber 50 parts by weight to obtain a blended yarn, and then knitting the blended yarn and spandex 15 parts by weight with a circular knitting machine to obtain the fabric which is a double-sided cloth with a weight of 200g/m$^2$;

(2) singeing: singeing the grey cloth to obtain singed grey cloth through two-face-two-back singeing under the condition that a cloth speed is 90m/min, a distance between the grey cloth and a reducing flame is 1.2cm, a distance between the grey cloth and a copper plate is 0.6cm, a distance between the grey cloth and a cylinder is 6cm, and a singeing grade is 5 grades;

(3) pretreatment: immersing the singed grey cloth in a pretreatment liquid for 30 minutes at a temperature of 30°C and at a mass ratio of 1:15 which is a mass ratio of the singed grey cloth to the pretreatment liquid, drying the singed grey cloth taken out at 70°C to constant weight to obtain a pretreatment fabric; and

(4) moisture adsorption and perspiration exhaust finishing: immersing the pretreatment fabric in a finishing liquid for 30 minutes at a temperature of 25°C and at a mass ratio of 1:15 which is a mass ratio of the pretreatment fabric to the finishing liquid, drying the pretreatment fabric taken out at 100°C for 6 minutes, baking at 150°C for 120 seconds, washing twice at room temperature, and then drying at 70°C to constant weight to obtain the fabric for perspiration exhaust pajamas and underclothing.

The pretreatment liquid is prepared by the following method: mixing inorganic salt 2 parts by weight, glycine 0.3 parts by weight, acetic acid 1 part by weight and water 96.7 parts by weight, and stirring at 200rpm/min and 30°C for 10 minutes to obtain the pretreatment liquid.

The inorganic salt is a mixture of magnesium chloride and calcium chloride, and a mass ratio of magnesium chloride to calcium chloride is 3:1.

The finishing liquid is prepared by the following method: adding penetrating agent 0.4 parts by weight, moisture adsorption and perspiration exhaust finishing agent 3 parts by weight, modified xanthan gum 0.6 parts by weight, and water 96 parts by weight to the water, and stirring at 200rpm/min and 25°C for 10 minutes.

The penetrating agent is coconut oil diethanolamine amide.

The modified xanthan gum is prepared by the following method: obtaining neutralized acrylic acid by mixing acrylic acid 12g and 5mol/L sodium hydroxide solution 1.1g and stirring at 150 rpm/min for 4 minutes, adding xanthan gum 1g to water 140mL, stirring at 150rpm/min and 25°C for 50 minutes, adding the neutralized acrylic acid, acrylamide 12g and cross-linking agent 0.3g, stirring at 150rpm/min while warming to a temperature of 70°C in a nitrogen atmosphere, adding dropwise 8wt% potassium persulfate solution 6g within 30 minutes, stirring at 150rpm/min and 70°C for 3 hours, then adding ethanol 700 mL, stirring at 60rpm/min for 4 minutes, standing at 25°C for 2 hours and filtrating with a 500 mesh filter cloth, washing an obtained filter cake with 80 volume% ethanol twice, drying at 50°C to constant weight, and pulverizing and passing through a 60 mesh sieve to obtain the modified xanthan gum.

The cross-linking agent is allyl glycidyl ether.

**First Test Example**

The moisture permeability of the fabric for perspiration exhaust pajamas or underclothing according to the examples and comparative examples is tested. The moisture permeability refers to a property of water vapor passing through a sample within a predetermined time under the condition that there is a constant vapor pressure difference between both sides of the sample.

According to the evaporation method in GB/T12704-2009, the experimental environment temperature is 20±2°C, the relative humidity is 65%±2%, the sample is a circular sample with a diameter of 7cm, and each group includes three samples. Experimental principle: after placing a moisture permeable cup containing distilled water having a certain temperature and sealed with a cloth sample in a sealed environment having a predetermined temperature and humidity, a moisture permeability rate of the sample is calculated based on a change in the mass of the moisture permeable cup within a certain time, wherein the moisture permeability rate is a mathematic average of the moisture permeability rates of the three samples and is calculated according to the following formula:

$$\text{moisture permeability rate } MVT = \frac{24 \bullet \Delta m}{A \bullet T}$$

Wherein, MVT (g/(m$^2$·d)) is the moisture permeability rate, Δm (g) is a difference in the mass of the same experimental assembly between two weightings, A (m$^2$) is a test area of the sample, and T (h) is a test time.

The specific test results are shown in Table 1.

Table 1 test result table for the moisture permeability rate of the fabric for perspiration exhaust pajamas and underclothing

|  | moisture permeability rate (g/(m$^2$·d)) |
|---|---|
| First Example | 1357.463 |
| Second Example | 1639.174 |
| First Comparative Example | 1526.473 |
| Third Example | 1564.517 |
| Fourth Example | 1552.684 |
| Fifth Example | 1864.961 |
| Second Comparative Example | 1702.527 |
| Sixth Example | 1806.512 |
| Seventh Example | 2036.653 |

**Second Test Example**

The wicking height of the fabric for perspiration exhaust pajamas or underclothing according to the examples and comparative examples and the wicking height thereof after washing 30 times are tested, respectively.

The wicking height test: according to FZ/T01071-2008 "*Textile-Test method for capillary effect*", the wicking height of the fabric for perspiration exhaust pajamas and underclothing is tested. In the test, a sample with a size of 30cm×3cm is placed in a LCK-800 capillary effect tester (Shandong Textile Research Institute Measurement and Control Equipment Development Center) according to the requirements, each group includes three samples, and the sample is tested after placed for 24 hours under a standard atmospheric condition in which the temperature is 20±2°C and the relative humidity is 65%±3%. An average value of measured liquid level rising heights of three samples within 30 minutes is the wicking height.

The durability test method includes: based on GB/T8629-2001 "*Textile-Domestic washing and drying procedures for textile testing*" and FZ/T01071-2008 "*Textile-Test method for capillary effect*", washing the sample with a size of 2.5cm×30cm using 2g/L washing powder at 40 °C for 5 minutes, rinsing with water twice, dehydrating and drying, then repeatedly washing with the above procedures in the same manner for 30 times, and finally placing at an environment having a temperature of (20±2)°C and a relative humidity of 65%±3% for humidity controlling for 24 hours to measure the wicking height of the fabric after washing.

The specific test results are shown in Table 2.

Table 2 text result table for the wicking height of the fabric for perspiration exhaust pajamas and underclothing

|  | wicking height (cm) | wicking height after washing 30 times (cm) |
|---|---|---|
| First Example | 15.4 | 10.2 |
| Second Example | 17.1 | 14.5 |
| First Comparative Example | 16.2 | 11.3 |
| Third Example | 16.7 | 12.4 |
| Fourth Example | 16.5 | 12.1 |
| Fifth Example | 18.9 | 16.7 |
| Second Comparative Example | 17.4 | 15.0 |
| Sixth Example | 18.5 | 16.3 |
| Seventh Example | 20.5 | 18.3 |

In the second example, since the modified xanthan gum is adopted, the moisture permeability, the wicking height and the washing resistance of the fabric for perspiration exhaust pajamas and underclothing are superior to those in the first example. In the second example to the fourth example, since the cross-linking agent is used for preparing xanthan gum, the moisture permeability, the wicking height and the washing resistance of the fabric for perspiration exhaust pajamas and underclothing are superior to those in the first comparative example. In the fifth example, since the pretreatment is performed on the fabric, the moisture permeability, the wicking height and the washing resistance of the fabric for perspiration exhaust pajamas and underclothing are superior to those in the second example to the fourth example. This may be because that the fiber after the pretreatment becomes loose, which is beneficial to the subsequent moisture adsorption and perspiration exhaust finishing. Moreover, since the inorganic salt is added to the pretreatment liquid, the property of the fabric for perspiration exhaust pajamas and underclothing becomes better.

**Claims**

1. A method of preparing a fabric having a perspiration wicking functionality through the thickness of the fabric and a perspiration exhaust functionality at a surface thereof, the fabric being suitable for pajamas or underclothing, comprising:

   (1) grey cloth knitting comprising: knitting 10-100 parts by weight of a fiber having a perspiration wicking and exhaust property, and 10-100 parts by weight of a regenerated cellulose fiber, and 0-30 parts by weight of spandex into said grey cloth;
   (2) singeing, comprising: singeing the grey cloth to obtain singed grey cloth through two front-to-back singeing under the condition that a cloth speed is 80-100 m/min, a distance between the grey cloth and a reducing flame is 1-1.2 cm, a distance between the grey cloth and a copper plate is 0.5-0.8 cm, a distance between the grey cloth and a cylinder is 5-7 cm, and a singeing grade is 4-5 grades;, **characterized in that**
   (3) pretreatment, comprising: immersing the singed grey cloth in a pretreatment liquid for 25-35 minutes at a temperature of 28-32°C , wherein a mass ratio of the singed grey cloth to the pretreatment liquid is 1:(10-20), taking out the singed grey cloth for drying at 60-80°C to constant weight to obtain a pretreatment fabric;

   wherein the pretreatment liquid is prepared by the following method: mixing 1-3 parts by weight of an inorganic salt, 0.2-0.4 parts by weight of glycine, 0.8-1.2 parts by weight of acetic acid and 90-100 parts by weight of water, and stirring at 28-32°C for 8-12 minutes to obtain the pretreatment liquid;
   wherein the inorganic salt is a mixture of magnesium chloride and calcium chloride, and a mass ratio of magnesium chloride to calcium chloride is (1-5): 1; and

   (4) moisture adsorption and perspiration wicking and exhaust functionality finishing, comprising:

   immersing the pretreatment fabric in a finishing liquid for 25-35 minutes at a temperature of 20-30°C, wherein a mass ratio of the pretreatment fabric to the finishing liquid is 1:(10-20), taking out the pretreatment fabric for drying at 90-110°C for 4-8 minutes, baking at 140-160°C for 100-150 seconds, washing at room temperature for 1-3 times, and then drying at 60-80°C to constant weight to obtain the fabric;
   wherein the finishing liquid comprises 0.2-0.6 parts by weight of penetrating agent, 2-4 parts by weight of finishing agent, 0.4-0.8 parts by weight of xanthan gum or modified xanthan gum, and 90-100 parts by weight of water;
   wherein the penetrating agent is one or two of coconut oil diethanolamine amide and isooctanol polyethenoxy ether;
   the modified xanthan gum is prepared by the following method: mixing 10-15 g of acrylic acid and 0.8-1.3 g of 4-6 mol/L sodium hydroxide solution and stirring for 3-5 minutes, adding 0.8-1.2 g of xanthan gum to 120-150mL of water, stirring at 20-30°C for 40-60 minutes, adding the neutralized acrylic acid, 10-15 g of acrylamide and 0.2-0.4 g of cross-linking agent, stirring while heating to a temperature of 65-75°C in a nitrogen atmosphere, adding dropwise 4-8 g of 5-10 wt% potassium persulfate solution within 20-40 minutes, stirring at 65-75°C for 2-4 hours, then adding 600-800 mL of ethanol, stirring for 3-5 minutes, putting aside at 20-30°C for 1-3 hours and filtrating, washing an obtained filter cake with 75-85 volume% ethanol for 1-3 times, drying at 40-60°C to constant weight, and pulverizing to obtain the modified xanthan gum.

2. The method according to claim 1, **characterized in that** the cross-linking agent is one or more of allyl glycidyl ether, 3-glycidoxypropyltrimethoxysilane and trimethylolpropane triglycidyl ether.

**Patentansprüche**

1. Verfahren zur Herstellung eines Stoffes mit einer schweißableitenden Funktion durch die Dicke des Stoffes und einer schweißabsaugenden Funktion an einer Oberfläche davon, der Stoff für Pyjamas oder Unterwäsche geeignet ist, umfassend:

(1) Stricken von grauem Gewebe, umfassend: Stricken von 10 - 100 Gewichtsteilen einer Faser mit einer schweißableitender und -absaugender Eigenschaft und 10 - 100 Gewichtsteilen einer regenerierten Zellulosefaser und 0 - 30 Gewichtsteilen Elasthan in das genannte graue Gewebe;

(2) Versengen, umfassend: Versengen von grauem Gewebe, um ein gesengtes graues Gewebe durch zwei Vorwärts-Rückwärts-Versengen zu erhalten, unter der Bedingung, dass eine Gewebegeschwindigkeit 80-100 m/min beträgt, ein Abstand zwischen dem grauen Gewebe und einer reduzierenden Flamme 1-1. 2 cm, ein Abstand zwischen dem grauen Gewebe und einer Kupferplatte 0.5-0.8 cm, ein Abstand zwischen dem grauen Gewebe und einem Zylinder 5-7 cm beträgt, und ein Knickgrad 4-5 Grade beträgt, **dadurch gekennzeichnet, dass**

(3) Vorbehandlung, umfassend: Eintauchen des gesengten grauen Gewebes in eine Vorbehandlungsflüssigkeit für 25-35 Minuten bei einer Temperatur von 28-32°C, wobei ein Massenverhältnis des gesengten grauen Gewebes zu Vorbehandlungsflüssigkeit 1:(10-20) beträgt, Entfernen des gesengten grauen Gewebes, um es bei 60-80°C auf ein konstantes Gewicht zu trocknen, um ein Vorbehandlungsgewebe zu erhalten;

wobei die Vorbehandlungsflüssigkeit durch das folgende Verfahren hergestellt wird: Mischen von 1-3 Gewichtsteilen eines anorganischen Salzes, 0.2-0.4 Gewichtsteilen Glycin, 0.8-1.2 Gewichtsteilen Essigsäure und 90-100 Gewichtsteilen Wasser, und Rühren bei 28-32°C für 8-12 Minuten, um die Vorbehandlungsflüssigkeit zu erhalten;

wobei das anorganische Salz eine Mischung aus Magnesiumchlorid und Calciumchlorid ist und das Massenverhältnis von Magnesiumchlorid zu Calciumchlorid (1-5): 1 beträgt; und

(4) Adsorption von Feuchtigkeit und Ausrüstung mit schweißableitender und absaugender Funktion, umfassend:

Eintauchen des Vorbehandlungsstoffes in eine Ausrüstungsflüssigkeit für 25-35 Minuten bei einer Temperatur von 20-30°C, wobei das Gewichtsverhältnis des Vorbehandlungsstoffes zur Ausrüstungsflüssigkeit 1:(10-20) beträgt, Entfernen des Vorbehandlungsstoffes zum Trocknen bei 90-110°C für 4-8 Minuten, Kochen bei 140-160°C für 100-150 Sekunden, Waschen bei Raumtemperatur für 1-3 Mal und dann Trocknen bei 60-80°C bis zu einem konstanten Gewicht, um den Stoff zu erhalten;

wobei die Ausrüstungsflüssigkeit 0.2-0.6 Gewichtsteile Penetrationsmittel, 2-4 Gewichtsteile Ausrüstungsmittel, 0.4-0.8 Gewichtsteile Xanthangummi oder modifizierten Xanthangummi und 90-100 Gewichtsteile Wasser umfasst;

wobei das Penetrationsmittel eines von Kokosöldiethanolaminamid und Isooctanolpolyethenoxyether ist; das modifizierte Xanthangummi wird durch das folgende Verfahren hergestellt: Mischen von 10-15 g Acrylsäure und 0,8-1,3 g 4-6 mol/L Natriumhydroxidlösung und Rühren für 3-5 Minuten, Zugabe von 0.8-1.2 g Xanthangummi zu 120-150 ml Wasser, Rühren bei 20-30°C für 40-60 Minuten, Zugabe von neutralisierter Acrylsäure, 10-15 g Acrylamid und 0.2-0.4 g Vernetzungsmittel, Rühren unter Erhitzen auf 65-75°C in einer Stickstoffatmosphäre, tropfenweise Zugabe von 4-8 g 5-10 gew.-%iger Kaliumpersulfatlösung in 20-40 Minuten, Rühren bei 65-75°C für 2-4 Stunden, dann Zugabe von 600-800 mL Ethanol, Rühren für 3-5 Minuten, Abstellen bei 20-30°C für 1-3 Stunden und Filtrieren, Waschen des erhaltenen Filterkuchens mit 75-85 Vol.-% Ethanol für 1-3 Mal, Trocknen bei 40-60°C bis zu einem konstanten Gewicht und Pulverisieren, um modifizierten Xanthangummi zu erhalten.

2. Verfahren nach Anspruch 1, **dadurch gekennzeichnet, dass** das Vernetzungsmittel eines oder mehrere von Allylglycidylether, 3-Glycidoxypropyltrimethoxysilan und Trimethylolpropan-Triglycidylether ist..

**Revendications**

1. Procédé de préparation d'un tissu ayant une fonctionnalité de méchage de transpiration à travers l'épaisseur du tissu et une fonctionnalité d'échappement de transpiration à une surface de celui-ci, le tissu étant approprié pour les pyjamas ou les sous-vêtements, comprenant :

(1) le tricotage d'étoffe grise comprenant : le tricotage de 10 - 100 parties en poids d'une fibre ayant une propriété de méchage et d'échappement de la transpiration, et 10 - 100 parties en poids d'une fibre de cellulose régénérée, et 0 - 30 parties en poids de spandex dans ladite étoffe grise;

(2) le flambage, comprenant : le flambage d'étoffe grise pour obtenir une étoffe grise flambée à travers deux flambages avant-arrière sous la condition qu'une vitesse d'étoffe est 80-100 m/min, une distance entre l'étoffe grise et une flamme réductrice est 1-1.2 cm, une distance entre l'étoffe grise et une plaque de cuivre est 0.5-0.8 cm, une distance entre l'étoffe grise et un cylindre est 5-7 cm, et une classe de flambage est 4-5 classes, **caractérisé en ce que**

(3) le prétraitement, comprenant : l'immersion d'étoffe grise flambée dans un liquide de prétraitement pendant 25-35 minutes à une température de 28-32°C, dans lequel le rapport massique d'étoffe grise flambée au liquide de prétraitement est de 1:(10-20), le retrait d'étoffe grise flambée pour le sécher à 60-80°C jusqu'à un poids constant pour obtenir un tissu de prétraitement ;

dans lequel le liquide de prétraitement est préparé par le procédé suivant : le mélange de 1-3 parties en poids d'un sel inorganique, 0.2-0.4 parties en poids de glycine, 0.8-1.2 parties en poids d'acide acétique et 90-100 parties en poids d'eau, et l'agitation à 28-32°C pendant 8-12 minutes pour obtenir le liquide de prétraitement ;

dans lequel le sel inorganique est un mélange de chlorure de magnésium et de chlorure de calcium, et le rapport massique du chlorure de magnésium au chlorure de calcium est de (1-5):1 ; et

(4) l'adsorption de l'humidité et la finition de la fonctionnalité du méchage et d'échappement de la transpiration,

comprenant :

l'immersion du tissu de prétraitement dans un liquide de finition pendant 25-35 minutes à une température de 20-30°C, dans lequel le rapport massique du tissu de prétraitement au liquide de finition est de 1:(10-20), le retrait du tissu de prétraitement pour le sécher à 90-110°C pendant 4-8 minutes, la cuisson à 140-160°C pendant 100-150 secondes, le lavage à température ambiante pendant 1-3 fois, et ensuite le séchage à 60-80°C jusqu'à un poids constant pour obtenir le tissu ;

dans lequel le liquide de finition comprend 0.2-0.6 parties en poids d'agent de pénétration, 2-4 parties en poids d'agent de finition, 0.4-0.8 parties en poids de gomme xanthane ou de gomme xanthane modifiée, et 90-100 parties en poids d'eau ;

dans lequel l'agent pénétrant est l'un ou l'autre de l'amide de diéthanolamine d'huile de coco et de l'éther polyéthénoxy d'isooctanol ;

la gomme xanthane modifiée est préparée par le procédé suivant : le mélange de 10-15 g d'acide acrylique et de 0.8-1.3 g de solution d'hydroxyde de sodium 4-6 mol/L et l'agitation pendant 3-5 minutes, l'ajout de 0.8-1.2 g de gomme xanthane à 120-150 ml d'eau, l'agitation à 20-30°C pendant 40-60 minutes, l'ajout de l'acide acrylique neutralisé, de 10-15 g d'acrylamide et de 0.2-0.4 g d'agent de réticulation, l'agitation tout en chauffant à une température de 65-75°C dans une atmosphère d'azote, l'ajout goutte à goutte de 4-8 g de solution de persulfate de potassium à 5-10% en poids dans 20-40 minutes, l'agitation à 65-75°C pendant 2-4 heures, puis l'ajout de 600-800 mL d'éthanol, l'agitation pendant 3-5 minutes, la mise en attente à 20-30°C pendant 1-3 heures et la filtration, le lavage du gâteau de filtre obtenu avec 75-85% en volume d'éthanol pendant 1-3 fois, le séchage à 40-60°C jusqu'à un poids constant, et la pulvérisation pour obtenir la gomme de xanthane modifiée.

2. Procédé selon la revendication 1, **caractérisé en ce que** l'agent de réticulation est un ou plusieurs de l'éther glycidylique d'allyle, du 3-glycidoxypropyltriméthoxysilane et de l'éther triglycidylique de triméthylolpropane.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103882603 A
- CN 109505045 A
- GB T127042009 A
- GB T86292001 A